# EUROPEAN PATENT APPLICATION

(11) **EP 4 737 864 A1**
(43) Date of publication of application: **06.05.2026**
(21) Application number: 25213553.8
(22) Date of filing: 05.11.2025
(51) Int. Cl.: G01D 5/48

(54) **HARSH ENVIRONMENT MAGNETOSTRICTIVE DISPLACEMENT SENSOR**

(30) Priority: 05.11.2024 US 202463716512 P
(71) Applicant: Temposonics, LLC, Cary, North Carolina 27513 (US)
(72) Inventor: VIOLA, Uwe, Cary, NC (US); MININ, Aleksey, Cary, NC (US); ANTHONY, Jacob, Raleigh, NC (US)
(74) Representative: Meissner Bolte Partnerschaft mbB

(57) **Abstract**

A sensor assembly of a magnetostrictive displacement sensor includes a waveguide, a pickup sensing element, a balanced line driver circuit and a cable connector. The pickup sensing element is configured to generate a high impedance sensor response signal through a positive pickup terminal and a negative pickup terminal in response to a magnetostrictive response in the waveguide. The balanced line driver circuit includes positive and negative response signal circuits respectively configured to produce a positive sensor signal at a low impedance and a negative sensor signal at a low impedance based on the high impedance sensor response signal at the positive and negative pickup terminals. The cable connector includes a positive sensor terminal coupled to the positive sensor signal and a negative sensor terminal coupled to the negative sensor signal.

## Description

### CROSS-REFERENCE RELATED APPLICATION(S)

The present application is based on and claims the benefit of U.S. provisional patent application Serial No. 63/716,512, filed November 5, 2024, the content of which is hereby incorporated by reference in its entirety.

### FIELD

Embodiments of the present disclosure generally relate to magnetostrictive displacement sensors, and more specifically, to magnetostrictive displacement sensors that are suitable for displacement measurements within harsh environments.

### BACKGROUND

Magnetostrictive displacement sensors are robust, high resolution instruments which have proven to be useful in many measurement and control applications. Magnetostrictive displacement sensors generally include a sensor assembly, a target magnet and sensor electronics.

The sensor assembly generally includes a waveguide (e.g., conductive wire) and a pickup. The target magnet has a variable position along the waveguide corresponding to the position to be measured. The sensor electronics includes an excitation generator circuit that generates an excitation signal, such as a current pulse, which is conducted through the waveguide.

The excitation signal creates a magnetic field around the waveguide that interacts with the magnetic field of the target magnet to create a magnetostrictive response in the waveguide at the location of the target magnet. The magnetostrictive response takes the form of a sonic wave having mechanical pulse components including a longitudinal wave corresponding to a compression of the waveguide along its longitudinal axis, and a torsional wave corresponding to a torsional strain on the surface of the waveguide around the longitudinal axis. The pickup is located at an end of the waveguide and includes a transducer or sensing element that is used to detect the longitudinal wave or torsional wave by converting the wave into an electrical response signal.

The sensor electronics is configured to process the electrical response signal to determine the position of the target magnet based on a time of flight measurement between the excitation signal and a detection of the longitudinal wave or the torsional wave in the electrical response signal.

Some applications for magnetostrictive displacement sensors include harsh industrial environments, such as a high temperature environment (e.g., 105-120 °C), which may be found in steel mills and other industries. While the sensor assembly may be able to withstand such high temperature environments, the sensor electronics cannot. For example, the temperature range that is suitable for the sensor electronics may have an upper limit of only 70-80 °C. As a result, in order for a conventional magnetostrictive displacement sensor to be used in such high temperature environments (e.g., greater than 60 °C), the sensor electronics must be protected from the environment.

Some magnetostrictive displacement sensors, such as the R-Series Model RD4 sensor produced by Temposonics, address this problem by separating the sensor assembly and the sensor electronics from each other and linking the components through a cable. This allows the sensor assembly to make the desired displacement measurements within the high temperature environment while the sensor electronics may be positioned in a safer location.

Unfortunately, the length of the cable that may be used to connect the sensor assembly from the sensor electronics must be quite short (e.g., less than 0.5 meters) to limit distortion of the electrical response signal by the capacitance of the cable. As a result, the sensor electronics cannot generally be remotely displaced a significant distance away from the high temperature environment in which the sensor assembly is placed. Instead, the short cable length generally only allows the sensor electronics to be isolated within a protective housing located within the high temperature environment that prevents the sensor electronics from overheating. As a result, users must generally access the high temperature environment during setup and use of the sensor electronics.

### SUMMARY

Embodiments of the present disclosure generally relate to magnetostrictive displacement sensors, and more specifically, to magnetostrictive displacement sensors that are suitable for displacement measurements within harsh environments and methods of operating the magnetostrictive displacement sensors.

In some embodiments, the magnetostrictive displacement sensor includes a sensor assembly comprising a waveguide, a pickup sensing element, a signal conditioner and a cable connector. The pickup sensing element is configured to generate a high impedance sensor response signal through a positive pickup terminal and a negative pickup terminal in response to a magnetostrictive response in the waveguide corresponding to a target magnet. The signal conditioner includes a balanced line driver circuit comprising a positive response signal circuit configured to produce a positive sensor signal at a low impedance based on the high impedance sensor response signal at the positive pickup terminal, and a negative response signal circuit configured to produce a negative sensor signal at a low impedance based on the high impedance sensor response signal at the negative pickup terminal. The cable connector includes a positive sensor terminal coupled to the positive sensor signal and a negative sensor terminal coupled to the negative sensor signal. The balanced line driver circuit decouples the positive and negative pickup terminals from a capacitance of a cable connected to the cable connector. Additional embodiments of the magnetostrictive displacement sensor include one or more of the embodiments described below.

In accordance with one embodiment, the positive and negative response signal circuits form a differential buffer.

In accordance with one embodiment, the positive response signal circuit includes a first inverted operational amplifier having a first negative input terminal coupled to the positive pickup terminal, and a first positive input terminal connected to a reference voltage, the first inverted operational amplifier configured to amplify the high impedance sensor response signal at a first gain to produce the positive sensor signal, and the negative response signal circuit comprises a second inverted operational amplifier having a second negative input terminal coupled to the negative pickup terminal, and a second positive input terminal connected to a reference voltage, the second inverted operational amplifier configured to amplify the high impedance sensor response signal at a first gain to produce the negative sensor signal.

In accordance with one embodiment, the first gain is set to about 3 to 10.

In accordance with one embodiment, the positive response signal circuit includes a first non-inverted operational amplifier having a first positive input terminal coupled to the positive pickup terminal and a first negative input terminal, the first non-inverted operational amplifier configured to amplify the high impedance sensor response signal at a first gain to produce the positive sensor signal, which is fed back to the first negative input terminal, and the negative response signal circuit comprises a second non-inverted operational amplifier having a second positive input terminal coupled to the negative pickup terminal and a second negative input terminal, the second non-inverted operational amplifier configured to amplify the high impedance sensor response signal at a first gain to produce the negative sensor signal, which is fed back to the second negative input terminal.

In accordance with one embodiment, the first gain is set to about 3 to 10.

In accordance with one embodiment, the signal conditioner includes a bandpass filter configured to pass frequencies of the sensor response signal within a range of about 100 kHz to 650 kHz to the balanced line driver circuit.

In accordance with one embodiment, the magnetostrictive displacement sensor includes a cable attached to the cable connector and including a positive response wire connected to the positive sensor terminal, a negative response wire connected to a negative sensor terminal, and a waveguide wire coupled to a waveguide terminal of the cable connector that is connected to the waveguide, and sensor electronics. The sensor electronics includes an excitation generator configured to generate a current pulse that is delivered to the waveguide through the waveguide wire of the cable, a receiver circuit configured to receive the positive sensor signal from the positive response wire and the negative sensor signal from the negative sensor wire and output a received sensor signal and a controller configured to generate a position estimate of the target magnet relative to the waveguide based on the received sensor signal.

In accordance with one embodiment, the receiver circuit comprises a transformer.

In accordance with one embodiment, a length of the cable is greater than about 3 meters.

Another example of the magnetostrictive displacement sensor includes a target magnet, a sensor assembly, a cable and sensor electronics. The sensor assembly includes a waveguide, a pickup sensing element configured to generate a high impedance sensor response signal through a positive pickup terminal and a negative pickup terminal in response to a magnetostrictive response in the waveguide corresponding to the target magnet, a signal conditioner and a cable connector. A balanced line driver circuit of the signal conditioner includes a positive response signal circuit configured to produce a positive response signal at a low impedance based on the high impedance sensor response signal at the positive pickup terminal, and a negative response signal circuit configured to produce a negative sensor signal at a low impedance based on the high impedance sensor response signal at the negative pickup terminal. The cable connector includes a positive sensor terminal coupled to the positive sensor signal, a negative sensor terminal coupled to the negative sensor signal, and a waveguide terminal coupled to the waveguide. The cable is attached to the cable connector and includes a positive response wire connected to the positive sensor terminal, a negative response wire connected to a negative sensor terminal, and a waveguide wire coupled to the waveguide terminal. The sensor electronics includes an excitation generator configured to generate a current pulse that is delivered to the waveguide through the waveguide wire of the cable, a receiver circuit configured to receive the positive sensor signal from the positive response wire and the negative sensor signal from the negative sensor wire and output a received sensor signal, and a controller configured to generate a position estimate of the target magnet relative to the waveguide based on the received sensor signal. Additional embodiments of the magnetostrictive displacement sensor include one or more of the embodiments described below.

In accordance with one embodiment, the positive and negative response signal circuits form a differential buffer.

In accordance with one embodiment, the positive response signal circuit comprises a first inverted operational amplifier having a first negative input terminal coupled to the positive pickup terminal, and a first positive input terminal connected to a reference voltage, the first inverted operational amplifier configured to amplify the high impedance sensor response signal at a gain to produce the positive sensor signal, and the negative response signal circuit comprises a second inverted operational amplifier having a second negative input terminal coupled to the negative pickup terminal, and a second positive input terminal connected to a reference voltage, the second inverted operational amplifier configured to amplify the high impedance sensor response signal at the gain to produce the negative sensor signal.

In accordance with one embodiment, the gain is set to about 3 to 10.

In accordance with one embodiment, the positive response signal circuit comprises a first non-inverted operational amplifier having a first positive input terminal coupled to the positive pickup terminal and a first negative input terminal, the first non-inverted operational amplifier configured to amplify the high impedance sensor response signal at a gain to produce the positive sensor signal, which is fed back to the first negative input terminal, and the negative response signal circuit comprises a second non-inverted operational amplifier having a second positive input terminal coupled to the negative pickup terminal and a second negative input terminal, the second non-inverted operational amplifier configured to amplify the high impedance sensor response signal at the gain to produce the negative sensor signal, which is fed back to the second negative input terminal.

In accordance with one embodiment, the gain is set to about 3 to 10.

In accordance with one embodiment, the signal conditioner includes a bandpass filter configured to pass frequencies of the sensor response signal within a range of about 100 kHz to 650 kHz to the balanced line driver circuit.

In accordance with one embodiment, the receiver circuit comprises a transformer.

In accordance with one embodiment, a length of the cable is greater than about 3 meters.

In one example of a method of operating magnetostrictive displacement sensor, the magnetostrictive displacement sensor includes a target magnet, a sensor assembly and sensor electronics. The sensor assembly includes a waveguide, a pickup sensing element, a signal conditioner having a balanced line driver circuit including a positive response signal circuit, and a negative response signal circuit, and a cable connector including a positive sensor terminal, a negative sensor terminal and a waveguide terminal. The sensor electronics includes an excitation generator, a receiver circuit and a controller. In the method, a positive response wire of a cable is connected to the positive sensor terminal, a negative response wire of the cable is connected to the negative sensor terminal, and a waveguide wire of the cable is connected to the waveguide terminal. A current pulse generated using the excitation generator is delivered to the waveguide through the waveguide wire and the waveguide terminal. A magnetostrictive response is generated in the waveguide at a location of a target magnet in response to the current pulse in the waveguide. A high impedance sensor response signal to the magnetostrictive response is generated through a positive pickup terminal and a negative pickup terminal of the pickup sensing element. The high impedance sensor response signal at the positive pickup terminal is converted to a low impedance positive sensor signal using the positive response signal circuit. The high impedance negative sensor signal is converted to low impedance negative sensor signal using the negative response signal circuit. The low impedance positive sensor signal is delivered to the receiver circuit through the positive response wire and the low impedance negative sensor signal is delivered to the receiver circuit through the negative response wire. A received sensor signal is generated based on the low impedance positive sensor signal and the low impedance negative sensor signal using the receiver circuit. A position estimate of the location of the target magnet relative to the waveguide is determined based on the received sensor signal using the controller. In some additional embodiments of the method, the magnetostrictive displacement sensor includes one or more of the embodiments described above.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the Background.

### BRIEF DESCRIPTION OF THE DRAWINGS

FIGS. 1 and 2 respectively are a schematic pictorial view and a simplified circuit diagram of an example of a magnetostrictive displacement sensor, in accordance with embodiments of the present disclosure.
FIGS. 3A-D are isometric views of examples of pickups, in accordance with embodiments of the present disclosure.
FIGS. 4 and 5 are simplified circuit diagrams of examples of a balanced line driver circuit, in accordance with embodiments of the present disclosure.
FIG. 6 is simplified circuit diagram of an example of a receiver circuit, in accordance with embodiments of the present disclosure.
FIG. 7 is a flowchart illustrating a method of operating a magnetostrictive displacement sensor, in accordance with embodiments of the present disclosure.

### DETAILED DESCRIPTION OF ILLUSTRATIVE EMBODIMENTS

Embodiments of the present disclosure are described more fully hereinafter with reference to the accompanying drawings. Elements that are identified using the same or similar reference characters refer to the same or similar elements. The various embodiments of the present disclosure may, however, be embodied in many different forms and should not be construed as limited to the specific embodiments set forth herein. Rather, embodiments are described so that this disclosure will be thorough and complete, and will fully convey the scope of the embodiments to those skilled in the relevant art.

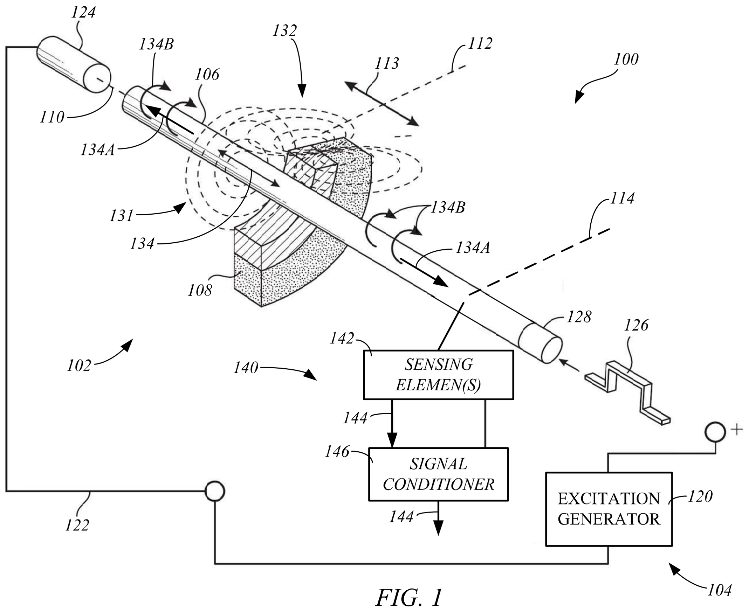

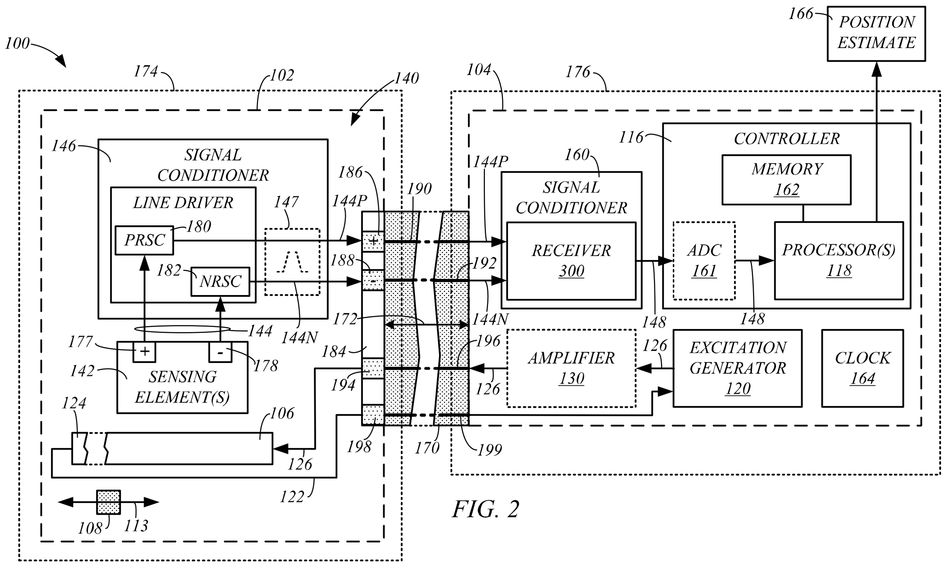

FIGS. 1 and 2 respectively are a schematic pictorial view and a simplified circuit diagram of an example of a magnetostrictive displacement sensor (MDS) 100, in accordance with embodiments of the present disclosure. The MDS 100 includes a sensor assembly 102 and sensor electronics 104. The sensor assembly 102 includes a wire having magnetoelastic properties, referred to as a waveguide 106 and a pickup.

At least one target magnet 108 is located near the waveguide 106 and has a position 112 that is adjustable along an axis 110 of the waveguide 106, as indicated by arrow 113. The target magnet 108 may take the form of a bar magnet positioned alongside the waveguide 106, a ring magnet that surrounds the waveguide 106, or another suitable form. The MDS 100 is generally configured to measure the position 112 of the target magnet 108 along the waveguide 106 relative to a reference position 114.

The sensor electronics 104 includes a controller 116 having one or more processors 118, and an excitation generator circuit 120 that is connected to the waveguide 106. A closed electrical circuit may be formed by the excitation generator circuit 120, the waveguide 106, and a return wire 122 that connects a distal end 124 of the waveguide 106 back to the sensor electronics 104, such as the excitation generator circuit 120, as shown in FIG. 1. The controller 116 uses the excitation generator circuit 120 to generate an electrical current pulse 126 that is delivered to a proximal end 128 of the waveguide 106. An amplifier 130 (FIG. 2) of the sensor electronics 104 may be used to amplify the current pulse 126 before applying it to the waveguide 106.

The transmission of the current pulse 126 through the waveguide 106 generates a magnetic field 131 that interacts with the magnetic field 132 of the magnet 108 to generate a mechanical magnetostrictive response (e.g., acoustic waves) 134 in the waveguide 106, as indicated in FIG. 1. The magnetostrictive response 134 includes a longitudinal wave 134A (e.g., longitudinal compression) and a torsional wave 134B (e.g., torsional strain).

The magnetostrictive response 134 travels from both sides of the magnet 108 along the waveguide 106. For example, a portion of the magnetostrictive response 134 may travel along the waveguide 106 from the position 112 of the magnet 108 toward the end 124 and possibly to a damper (not shown) that reduces or eliminates propagation of the acoustic waves 134 back through the waveguide 106. Additionally, a portion of the magnetostrictive response 134 travels from the position 112 of the magnet 108 toward the end 128, at which a magnetostrictive response pickup 140 is used to sense the magnetostrictive response 134, such as the longitudinal wave 134A and/or the torsional wave 134B.

The pickup 140 includes one or more sensing elements 142 that are configured to sense the magnetostrictive response 134 and generate at least one electrical sensor response signal 144 that is based on the magnetostrictive response 134. That is, the electrical response signal or signals 144 includes an indicator of the longitudinal wave 134A and/or an indicator of the torsional wave 134B. The one or more indicators may comprise a transient change or pulse in the magnitude of the signal 144, for example. The indicators may be detected by the controller 116 to determine the position 112 of the target magnet 108 based on the time from when the current pulse 126 is generated to when the indicator of the magnetostrictive response 134 is detected in the signal 144 using conventional techniques.

A signal conditioner 146 of the pickup 140 may be used to isolate the sensing element(s) 142 from electrical interference and condition (e.g., amplify, rectify, filter, etc.) the signals 144 before delivering the conditioned signals 144 to the sensor electronics 104, as indicated in FIG. 2. For example, the signal conditioner may include a bandpass filter 147 that isolates frequencies of the signals 144 corresponding to the anticipated magnetostrictive response indicator, such as a frequency range of about 100 kHz-650 kHz.

Thus, in some embodiments, the conditioned response signal 144 from the pickup 140 may be the original signal 144 generated by the sensing element(s) 142, such as when the pickup 140 does not include the signal conditioner 146, or the response signal 144 after being conditioned or processed by the circuitry of the signal conditioner 146.

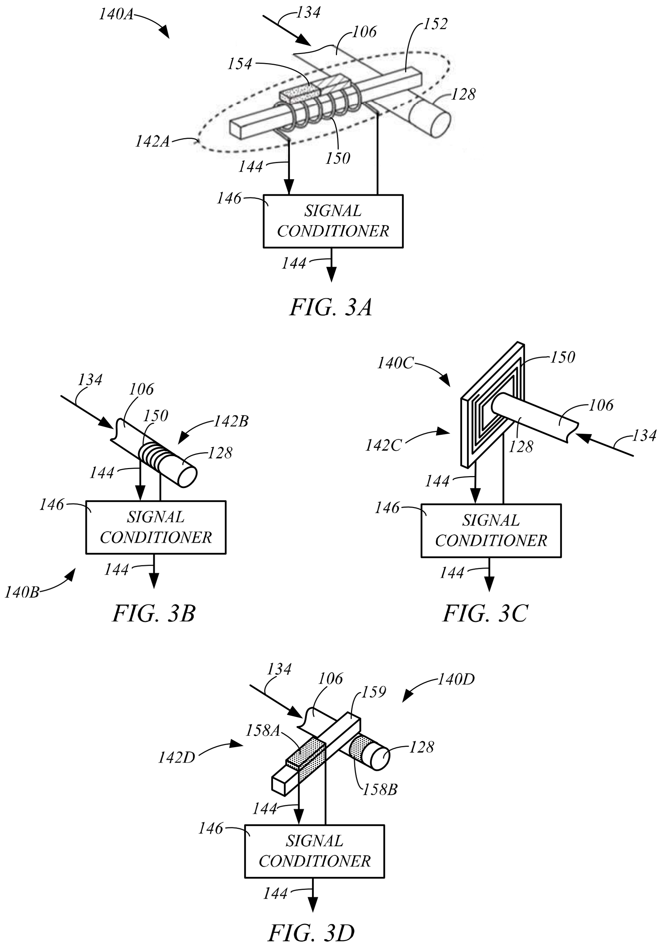

The sensing element 142 may take on any suitable form. FIGS. 3A-D are isometric views of examples of pickups 140A-D, in accordance with embodiments of the present disclosure. The example sensing element 142A includes a coil 150 that is attached to the waveguide 106, such as through a rigid member 152, as shown in FIG. 3A. A magnet 154 has a magnetic field that surrounds the coil 150. When the magnetostrictive response 134 (e.g., longitudinal wave or torsional wave) traveling through the waveguide 106 reaches the member 152, the member 152 vibrates causing relative movement between the magnetic field and the coil 150. The magnetic field induces a current pulse in the coil 150, which forms the indicator of the response 134 in the sensor response signal 144 traveling through the coil 150. The signal 144 from the coil 150 may be processed by the signal conditioner 146 before reaching the controller 116 (FIG. 2).

One alternative to this arrangement is to form the member 152 out of a magnetic material and support the coil 150 in a manner that allows the magnetic member 152 to move relative to the coil 150. Thus, when the magnetic member 152 vibrates in response to the magnetostrictive response 134, a corresponding current pulse indicator is induced in the sensor response signal 144 from the coil 150 due to the movement of the magnetic field relative to the coil 150.

The sensing element 142 may include a conductive coil 150 that is wrapped around the waveguide 106 to form the example sensing element 142B shown in FIG. 3B, or the conductive coil 150 may be oriented in a plane that is generally perpendicular to the waveguide 106 to form the example sensing element 142C shown in FIG. 3C. In each case, the magnetostrictive response 134 traveling through the waveguide induces a current pulse or indicator in the sensor response signal 144 traveling through the coil 150.

The example sensing element 142D shown in FIG. 3D comprises a piezoelectric material 158 that is connected to the waveguide 106 and is configured to be physically strained in response to the magnetostrictive response 134. The strain on the piezoelectric material 158 produces a current pulse in the sensor response signal 144 that forms an indicator of the response 134. The piezoelectric material 158 may be exposed to the magnetostrictive response 134 through a piezoelectric material 158A that is connected to a side of the waveguide through a rigid member 159, or a piezoelectric material 158B that is connected to or in line with the waveguide 106, for example.

The sensor electronics 104 may process the one or more response signals 144 using any suitable technique. The sensor electronics 104 may include a signal conditioner 160 instead of, or in addition to, the signal conditioner 146 of the pickup 140. As with the signal conditioner 146, the signal conditioner 160 includes circuitry that amplifies, rectifies, filters, compares and/or performs another process on the response signal 144 to produce a processed or received sensor signal 148. Thus, the signal conditioner 146 may include, for example, a bandpass filter that replaces or supplements the bandpass filter 147 of the sensor assembly 102 and operates to isolate the frequency band (e.g., about 100 kHz-650 kHz) corresponding to the magnetostrictive response indicator in the response signal 144.

In one example, the controller includes an analog-to-digital converter (ADC) 161 that converts the sensor signal 148 into corresponding digital samples. For example, the ADC 161 may sample each of the one or more analog response signals 148 at a frequency that allows the sensor signal 148 to be further processed by the controller 116. The digital samples of each sensor signal 148 may be stored in non-transitory memory 162, which represents computer-readable memory (e.g., flash memory, optical data storage, magnetic data storage, etc.) of the sensor electronics 104, the sensor assembly 102 and/or a measurement device (e.g., process level transmitter) that utilizes the MDS 100, for example.

The sensor electronics 104 may include a clock generator 164 that begins a timing routine when the current pulse 126 is generated by the excitation generator circuit 120. The clock generator 164 may be used to determine the time of a detected indicator in the sensor signal 148 relative to the generation of the current pulse 126, such as through the assignment of a time for each digital sample of the sensor signal 148, in accordance with conventional techniques.

The one or more processors 118 of the controller 116 control components of the MDS 100 (e.g., excitation generator circuit 120), and/or perform one or more functions described herein in response to the execution of program instructions and calibration parameters stored in the memory 162. Each processor 118 of the controller 116 may comprise one or more computer-based systems, control circuits, microprocessor-based engine control systems, and/or programmable hardware components (e.g., field programmable gate array), for example. While the controller 116 is shown as being a component of the sensor electronics 104, it is understood that the controller 116 may represent one or more controllers and processors that are used within a measurement device to perform one or more functions described herein.

In some embodiments, the at least one processor 118 is configured to analyze the sensor signal 148 or the digital samples of the sensor signal 148 to detect the indicator of the longitudinal wave 134A and/or the indicator of the torsional wave 134B. The position 112 of the target magnet 108 may be determined by the one or more processors 118 based on the elapsed time from the generation of the current pulse 126 to the reception of the indicator in the sensor signal 148, and the known speed of the corresponding longitudinal acoustic wave 134A or torsional acoustic wave 134B through the waveguide 106, which may be specified by the calibration parameters, in accordance with conventional techniques. The controller 116 may output a position estimate 166 that indicates the calculated position 112 of the target magnet 108.

Embodiments of the present disclosure include features that facilitate connecting the sensor electronics 104 to the sensor assembly 102 through a long cable 170, such as a cable having a length 172 of about 10 meters or more, such as about 10-30 m or up to 100 m, for example, as indicated in FIG. 2. This allows the sensitive sensor electronics 104 to be remotely located from a harsh industrial environment 174, such as a high temperature environment (e.g., greater than 70 °C), in which the sensor assembly 102 is positioned for making displacement measurements. Thus, the long cable may be used to locate the sensor electronics 104 in a separate environment 176 that is suitable for its operation and that may be accessible to operators, such as in a room that is separated from the harsh industrial environment 174, making it unnecessary to install the sensor electronics 104 in a protective housing within the harsh environment 174.

The sensing element 142 (e.g., coil 150) of the pickup 140 generates the response signal 144 at a high impedance (e.g., 100 Kiloohms), which is generally not suitable for transmission through a cable having a length greater than 1 m. In some embodiments, the signal conditioner 146 includes a balanced line driver circuit 176 that is generally configured to convert the sensor response signal 144 from the high impedance to a low impedance (e.g., 100 ohms) that is suitable for transmission through the long cable 170. Additionally, embodiments of the circuit 176 decouple a positive pickup terminal 177 and a negative pickup terminal 178 of the pickup 140 from a capacitance of the cable 170, which would otherwise distort the response signal 144 and render it unsuitable for the sensor electronics 104 to accurately determine the position estimate 166.

In one example, the balanced line driver circuit 176 includes a positive response signal circuit 180 that is configured to produce a positive sensor signal 144P at a low impedance based on the sensor response signal 144 (positive response signal) at or received from the positive pickup terminal 177, and a negative response signal circuit 182 that is configured to produce a negative sensor signal 144N at a low impedance based on the sensor response signal 144 (negative response signal) at or received from the negative pickup terminal 178.

In some embodiments, the MDS 100 includes a cable connector 184 that is configured to facilitate communication of various electrical signals between the sensor assembly 102 and the sensor electronics 104 through the cable 170. In one example, the cable connector 184 includes a positive sensor terminal 186 coupled to the positive sensor signal 144P and a negative sensor terminal 188 coupled to the negative sensor signal 144N. When the cable connector 184 is connected to the cable 170, the positive sensor terminal 186 is coupled to a positive response wire 190 of the cable 170 and the negative sensor terminal 188 is coupled to a negative response wire 192 of the cable 170. With the opposing end of the cable 170 connected to the sensor electronics 104, the positive and negative response wires 190 and 192 may communicate the positive and negative sensor signals 144P and 144N from the driver circuit 176 to the sensor electronics 104, such as the signal conditioner 160, for processing. The signals 144P and/or 144N may be used by the controller 116 to determine the position of the target magnet 108, as discussed above.

The cable connector 184 may include additional terminals for connecting conducting wires of the cable 170 to the sensor assembly. For example, the cable connector 184 may include a waveguide terminal 194 that is connected to the waveguide 106 and facilitates communication of the current pulse 126 to the waveguide 106 through a waveguide wire 196 of the cable 170. The cable connector 184 may also include a return terminal 198 that may be used to connect the end 124 of the waveguide 106 back to the sensor electronics 104, such as to the excitation generator 120, circuit common voltage, etc., through a return wire 199 of the cable 170. The cable 170 may include additional conducting wires and the cable connector 184 may include corresponding terminals for communicating various signals between the sensor assembly 102 and the sensor electronics 104, such as an electrical common voltage, data signals, etc.

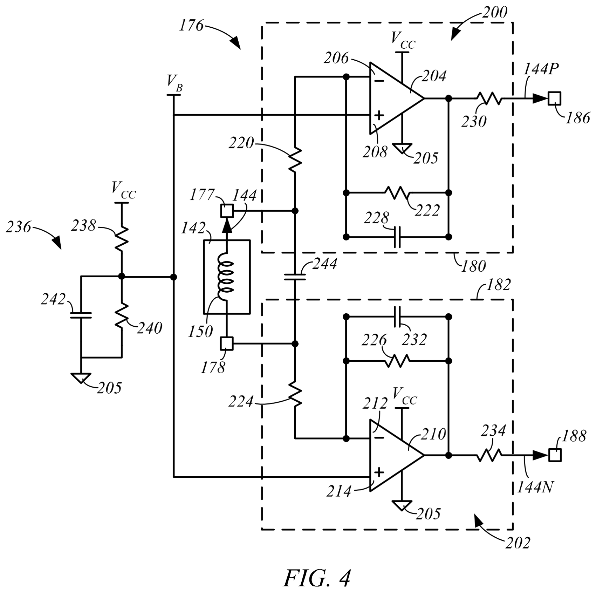

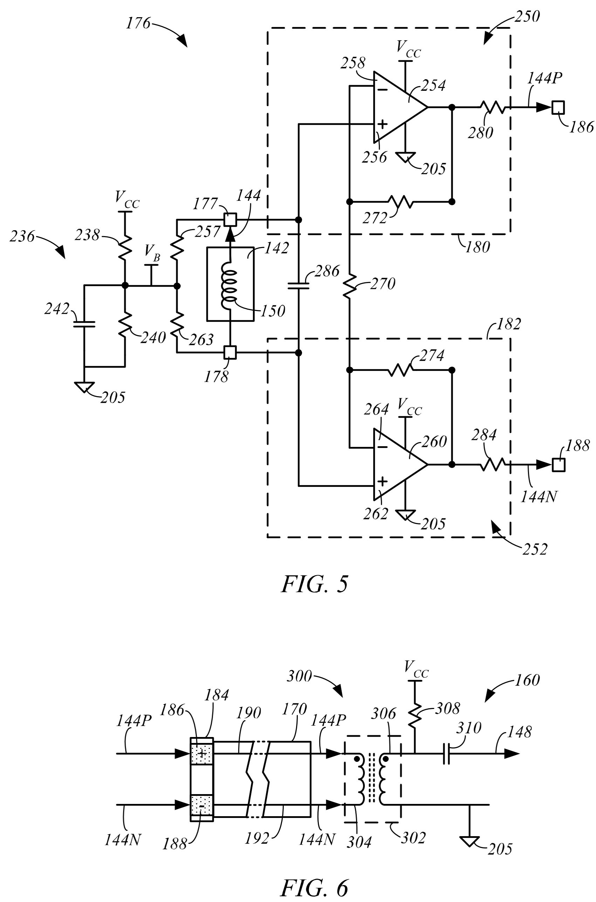

The balanced line driver circuit 176 may take on a variety of forms. FIGS. 4 and 5 are circuit diagrams of a balanced line driver circuit 176, in accordance with embodiments of the present disclosure. In one embodiment, the positive and negative response signal circuits 180 and 182 form a differential buffer that converts the high impedance response signal 144 to the low impedance response signals 144P and 144N, and provide various advantages such as the rejection of common mode noise and interference caused by external electric and magnetic fields acting on a connected cable 170.

The positive and negative response signal circuits 180 and 182 of the balanced line driver circuit 176 of FIG. 4 generally comprise inverted operational amplifier (op-amp) differential circuits 200 and 202, respectively. The circuit 200 is configured to transition the sensor signal 144 at the positive pickup terminal 177 from a high impedance to the low impedance positive sensor signal 144P.

In one example, circuit 200 includes an op-amp 204 that is connected to a supply power (V_{CC}) (e.g., 3.3V) and an electrical common voltage 205. A negative input terminal 206 of the op-amp 204 is coupled to the positive pickup terminal 177 of the sensing element 142, and a positive input terminal 208 is connected to a bias voltage (V_{B})(e.g.,1.65V). The op-amp 204 is generally configured to invert and possibly amplify the positive response signal 144 at a desired gain to produce the positive sensor signal 144P that is delivered to the positive sensor terminal 186 of the connector 184.

The circuit 202 may be configured in a similar manner as the circuit 200 and operates to transition the sensor signal 144 at the negative pickup terminal 178 from a high impedance to the low impedance negative sensor signal 144N. The circuit 202 includes an op-amp 210 that is connected to the supply power (V_{CC}) and the electrical common voltage 205. A negative input terminal 212 of the op-amp 210 is coupled to the negative pickup terminal 178 of the sensing element 142, and a positive input terminal 214 is connected to the bias voltage (V_{B}). The op-amp 210 is generally configured to invert and possibly amplify the negative response signal 144 at a desired gain to produce the negative sensor signal 144N that is delivered to the negative sensor terminal 188 of the connector 184.

The inverted op-amp differential circuit 200 may be configured to provide a gain of about 1-10, such as about 3-10, through the selection of the resistors 220 and 222 (gain = -(R222/R220)). Likewise, the inverted op-amp differential circuit 202 may be configured to provide a gain of about 1-10, such as about 3-10 through the selection of the resistor 224 and 226 (gain = -R226/R224).

The circuit 200 may include a capacitor 228 to tune a low-pass filter frequency for the positive response signal 144P. A resistor 230 may be used to tune the output voltage of the positive response signal 144P delivered to the positive sensor terminal 186.

Likewise, the circuit 202 may include a capacitor 232 to tune a low-pass filter frequency for the negative response signal 144N. A resistor 234 may be used to tune the output voltage of the negative response signal 144N delivered to the negative sensor terminal 188.

The bias voltage (V_{B}) that is applied to the positive input terminals 208 and 214 of the op-amps 204 and 210 may be achieved through various techniques. In the example balanced line driver circuit 176 of FIG. 4, the bias voltage (V_{B}) is provided by a bias voltage circuit 236, in which the supply voltage (V_{CC}) is provided to a voltage divider formed by resistors 238 and 240, which may be maintained using a capacitor 242.

A capacitor 244 may be connected between the positive and negative pickup terminals 177 and 178. The combination of the capacitor 244 and the sensor coil 150 form a bandpass filter (e.g., filter 147 in FIG. 2) that is preferably tuned to pass frequencies corresponding to the indicator of the magnetostrictive response in the sensor response signal 144 (e.g., 100 kHz-650 kHz), as discussed above.

The positive and negative response signal circuits 180 and 182 of the balanced line driver circuit 176 of FIG. 5 generally comprise non-inverted operational amplifier (op-amp) differential circuits 250 and 252, respectively. The circuit 250 is configured to transition the sensor signal 144 at the positive pickup terminal 177 from a high impedance to the low impedance positive sensor signal 144P.

In one example, the circuit 250 includes an op-amp 254 that is connected to a supply power (V_{CC}) and an electrical common voltage 205. A positive input terminal 256 of the op-amp 254 is coupled to the positive pickup terminal 177 of the sensing element 142 and a bias voltage (V_{B}) through a resistor 257, and a negative input terminal 258 is connected to a resistor 270 and the output of the op-amp 254 through a resistor 272.

The circuit 252 is configured in a similar manner as the circuit 250 and operates to transition the sensor signal 144 at the negative pickup terminal 178 from a high impedance to the low impedance negative sensor signal 144N. The circuit 252 includes an op-amp 260 that is connected to the supply power (V_{CC}) and the electrical common voltage 205. A positive input terminal 262 of the op-amp 260 is coupled to the negative pickup terminal 178 of the sensing element 142 and the bias voltage (V_{B}) through a resistor 263, and a negative input terminal 264 is connected to the resistor 270 and the output of the op-amp 260 through a resistor 274.

The non-inverted op-amp differential circuit 250 may be configured to amplify the positive response signal 144 at a desired gain to produce the positive sensor signal 144P that is delivered to the positive sensor terminal 186 of the connector 184. In some embodiments, the gain is about 1-10, such as 3-10, and may be realized through the selection of the resistors 270 and 272 (gain = 1 + 2 * R272/R270).

Likewise, the non-inverted op-amp differential circuit 252 may be configured to amplify the negative response signal 144 at a desired gain to produce the negative sensor signal 144N that is delivered to the negative sensor terminal 188 of the connector 184. In some embodiments, the gain is about 1-10, such as 3-10, and may be realized through the selection of the resistors 270 and 274 (gain = 1 + 2 * R274/R270).

A resistor 280 may be used to tune the output voltage of the positive response signal 144P delivered to the positive sensor terminal 186, and a resistor 284 may be used to tune the output voltage of the negative response signal 144N delivered to the negative sensor terminal 188.

The bias voltage (V_{B}) that is applied to the positive input terminals 256 and 262 of the op-amps 254 and 260 may be achieved through various techniques. The bias voltage (V_{B}) may be provided by the bias voltage circuit 236 discussed above, or through another suitable technique.

A capacitor 286 may be connected between the positive and negative pickup terminals 177 and 178. The combination of the capacitor 286 and the sensor coil 150 form a bandpass filter (e.g., filter 147 in FIG. 2) that is preferably tuned to pass frequencies corresponding to the indicator of the magnetostrictive response in the response signal 144 (e.g., 100 kHz-650 kHz), as discussed above.

The function of transforming the high impedance sensor signal 144 to a low impedance sensor signal that is suitable for transmission through a long cable to the sensor electronics 104 performed by the example positive and negative response signal circuits 180 and 182 of FIGS. 4 and 5 may be realized using different circuitry. For example, suitable response signal circuits may be formed using transistors rather than op-amps.

Embodiments of the sensor electronics 104 include features for receiving the low impedance sensor signals 144P and 144N from the sensor assembly 102 through the cable 170. In one example, the signal conditioner 160 includes a receiver circuit 300 that is configured to receive the positive sensor signal 144P from the positive response wire 190 and the negative sensor signal 144N from the negative sensor wire 192 and output the received sensor signal 148, as indicated in FIG. 2.

FIG. 6 is simplified circuit diagram of an example of the receiver circuit 300, in accordance with embodiments of the present disclosure. In some embodiments, the receiver circuit 300 includes a transformer 302 that provides galvanic isolation between the sensor assembly 102/cable 170 and the sensor electronics 104. A current (sensor signal 144) is driven through the primary winding 304 based on the received response signals 144P and 144N, and a corresponding current (received response signal 148) is induced in the secondary winding 306.

In some embodiments, the supply voltage (V_{CC}) is connected to the positive side of the secondary winding 306 through a resistor 308 and a capacitor 310. The capacitor 310 maintains a voltage relative to the electrical common voltage 205 that corresponds to the voltage of across the primary winding 304 and represents the received response signal 148.

A winding ratio of the transformer 302 may be selected to tune the voltage of the response signal 148 to be within a desired range. Embodiments of the winding ratio of the transformer 302 include 1:1, 1:2 and 1:3.

The receiver circuit 300 may also be formed using various active circuits comprising an input buffer with a high impedance, low capacitance and possibly some gain to transform the sensor signal 144 to the response signal 148. A suitable filter may be utilized, if necessary, to improve a signal-to-noise ratio of the response signal 148.

As discussed above, the response signal 148 may be processed by the controller 116 to identify the indicator of the magnetostrictive response and determine the estimate 170 of the position 112 of the target magnet 108 relative to the waveguide 106.

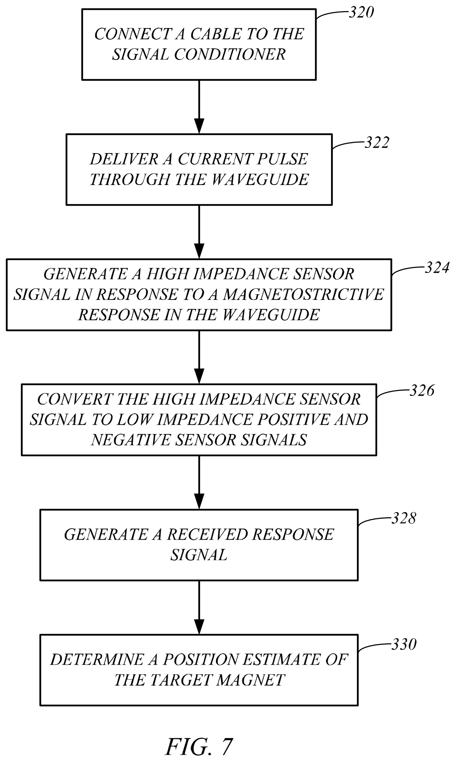

FIG. 7 is a flowchart illustrating an example method of operating the MDS 100, in accordance with embodiments of the present disclosure. In one example, the MDS 100 includes the target magnet 108, the sensor assembly and the sensor electronics 104, formed in accordance with one or more embodiments described herein. The sensor assembly includes the waveguide 106, the pickup 140, the signal conditioner 146 including the positive response signal circuit 180 and the negative response signal circuit 182, and the cable connector 184. The sensor electronics 104 includes the excitation generator 120, the receiver circuit 300 and the controller 116.

At 320 of the method, a cable 170 is connected to the signal conditioner 146 of the sensor assembly 102. For example, a positive response wire 190 of the cable 170 may be connected to the positive sensor terminal 186, a negative response wire 192 of the cable 170 may be connected to the negative sensor terminal 188, and/or a waveguide wire 196 of the cable 170 may be connected to the waveguide terminal 194, as shown in FIG. 2.

At 322, a current pulse 126 generated using the excitation generator 120 is delivered through the waveguide 106. For example, the current pulse 126 may be delivered to the waveguide 106 through the waveguide wire 196 and the waveguide terminal 194. After passing through the waveguide 106, the current pulse 126 may be returned through the return wire 122, as discussed above.

At 324, a sensor signal 144 is generated in response to a magnetostrictive response 134 in the waveguide 106 at a location 112 of the target magnet 108 in response to the current pulse 126, as indicated in FIG. 1. In some embodiments, the sensor signal 144 is generated at a high impedance using the sensor element 142 of the pickup 140 at a positive pickup terminal 177 and a negative pickup terminal 178.

At 326, the high impedance sensor signal 144 at the positive pickup terminal 177 is converted to a low impedance positive sensor signal 144P using the positive response signal circuit 180, and the high impedance sensor signal 144 at the negative pickup terminal 178 is converted to low impedance negative sensor signal 144N using the negative response signal circuit 182.

At 328 of the method, the low impedance positive and negative sensor signals 144P and 144N are delivered to the receiver circuit 300, which generates a received sensor signal 148 based on the signals 144P and 144N. For example, the low impedance positive sensor signal 144P may be delivered to the receiver circuit 300 through the positive response wire 190 and the low impedance negative sensor signal 144N may be delivered to the receiver circuit 300 through the negative response wire 192. The receiver circuit 300 generates the received sensor signal 148 based on the signals 144P and 144N, such as using a transformer 302 (FIG. 6).

At 330, a position estimate 166 of the location 112 of the target magnet 108 relative to the waveguide 106 is determined based on the received sensor signal 148 using the controller 116.

Although the embodiments of the present disclosure have been described with reference to preferred embodiments, workers skilled in the art will recognize that changes may be made in form and detail without departing from the spirit and scope of the present disclosure.

Functions recited herein may be performed by a single controller or processor, multiple controllers or processors, or at least one controller or processor. As used herein, when one or more functions are described as being performed by a controller (e.g., a specific controller), one or more controllers, at least one controller, a processor (e.g., such as a specific processor), one or more processors or at least one processor, embodiments include the performance of the function(s) by a single controller or processor, or multiple controllers or processors, unless otherwise specified. Furthermore, as used herein, when multiple functions are performed by at least one controller or processor, all of the functions may be performed by a single controller or processor, or some functions may be performed by one controller or one processor, and other functions may be performed by another controller or processor. Thus, the performance of one or more functions by at least one controller or processor does not require that all of the functions are performed by each of the controllers or processors, or by a single one of the controllers or processors.

The preferred aspects of the present disclosure may be summarized as follows:
1. A magnetostrictive displacement sensor including a sensor assembly comprising:
   a waveguide;
   a pickup sensing element configured to generate a high impedance sensor response signal through a positive pickup terminal and a negative pickup terminal in response to a magnetostrictive response in the waveguide corresponding to a target magnet;
   a signal conditioner comprising a balanced line driver circuit including:
      a positive response signal circuit configured to produce a positive sensor signal at a low impedance based on the high impedance sensor response signal at the positive pickup terminal; and
      a negative response signal circuit configured to produce a negative sensor signal at a low impedance based on the high impedance sensor response signal at the negative pickup terminal; and
   a cable connector including a positive sensor terminal coupled to the positive sensor signal and a negative sensor terminal coupled to the negative sensor signal,
   wherein, when a cable is connected to the cable connector, the balanced line driver circuit decouples the positive and negative pickup terminals from a capacitance of the cable.
2. The magnetostrictive displacement sensor according to aspect 1, wherein the positive and negative response signal circuits form a differential buffer.
3. The magnetostrictive displacement sensor according to any of the previous aspects, in particular aspect 2, wherein:
   the positive response signal circuit comprises a first inverted operational amplifier having a first negative input terminal coupled to the positive pickup terminal, and a first positive input terminal connected to a reference voltage, the first inverted operational amplifier configured to amplify the high impedance sensor response signal at a first gain to produce the positive sensor signal; and
   the negative response signal circuit comprises a second inverted operational amplifier having a second negative input terminal coupled to the negative pickup terminal, and a second positive input terminal connected to a reference voltage, the second inverted operational amplifier configured to amplify the high impedance sensor response signal at a first gain to produce the negative sensor signal.
4. The magnetostrictive displacement sensor according to any of the previous aspects, in particular aspect 3, wherein the first gain is set to about 3 to 10.
5. The magnetostrictive displacement sensor according to any of the previous aspects, in particular aspect 2, wherein:
   the positive response signal circuit comprises a first non-inverted operational amplifier having a first positive input terminal coupled to the positive pickup terminal and a first negative input terminal, the first non-inverted operational amplifier configured to amplify the high impedance sensor response signal at a first gain to produce the positive sensor signal, which is fed back to the first negative input terminal; and
   the negative response signal circuit comprises a second non-inverted operational amplifier having a second positive input terminal coupled to the negative pickup terminal and a second negative input terminal, the second non-inverted operational amplifier configured to amplify the high impedance sensor response signal at a first gain to produce the negative sensor signal, which is fed back to the second negative input terminal.
6. The magnetostrictive displacement sensor according to any of the previous aspects, in particular aspect 5, wherein the first gain is set to about 3 to 10.
7. The magnetostrictive displacement sensor according to any of the previous aspects, in particular aspect 2, wherein the signal conditioner includes a bandpass filter configured to pass frequencies of the sensor response signal within a range of about 100 kHz to 650 kHz to the balanced line driver circuit.
8. The magnetostrictive displacement sensor according to any of the previous aspects, in particular aspect 1, including:
   a cable attached to the cable connector and including a positive response wire connected to the positive sensor terminal, a negative response wire connected to a negative sensor terminal, and a waveguide wire coupled to a waveguide terminal of the cable connector that is connected to the waveguide; and
   sensor electronics comprising:
      an excitation generator configured to generate a current pulse that is delivered to the waveguide through the waveguide wire of the cable;
      a receiver circuit configured to receive the positive sensor signal from the positive response wire and the negative sensor signal from the negative sensor wire and output a received sensor signal; and
      a controller configured to generate a position estimate of the target magnet relative to the waveguide based on the received sensor signal.
9. The magnetostrictive displacement sensor according to any of the previous aspects, in particular aspect 8, wherein the receiver circuit comprises a transformer.
10. The magnetostrictive displacement sensor according to any of the previous aspects, in particular aspect 9, wherein a length of the cable is greater than about 3 meters.
11. A magnetostrictive displacement sensor comprising:
   a target magnet;
   a sensor assembly comprising
      a waveguide;
      a pickup sensing element configured to generate a high impedance sensor response signal through a positive pickup terminal and a negative pickup terminal in response to a magnetostrictive response in the waveguide corresponding to the target magnet;
      a signal conditioner comprising a balanced line driver circuit including:
         a positive response signal circuit configured to produce a positive response signal at a low impedance based on the high impedance sensor response signal at the positive pickup terminal; and
         a negative response signal circuit configured to produce a negative sensor signal at a low impedance based on the high impedance sensor response signal at the negative pickup terminal; and
      a cable connector including a positive sensor terminal coupled to the positive sensor signal, a negative sensor terminal coupled to the negative sensor signal, and a waveguide terminal coupled to the waveguide;
   a cable attached to the cable connector and including a positive response wire connected to the positive sensor terminal, a negative response wire connected to a negative sensor terminal, and a waveguide wire coupled to the waveguide terminal; and
   sensor electronics comprising:
      an excitation generator configured to generate a current pulse that is delivered to the waveguide through the waveguide wire of the cable;
      a receiver circuit configured to receive the positive sensor signal from the positive response wire and the negative sensor signal from the negative sensor wire and output a received sensor signal; and
      a controller configured to generate a position estimate of the target magnet relative to the waveguide based on the received sensor signal.
12. The magnetostrictive displacement sensor according to any of the previous aspects, in particular aspect 11, wherein the positive and negative response signal circuits form a differential buffer.
13. The magnetostrictive displacement sensor according to any of the previous aspects, in particular aspect 12, wherein:
   the positive response signal circuit comprises a first inverted operational amplifier having a first negative input terminal coupled to the positive pickup terminal, and a first positive input terminal connected to a reference voltage, the first inverted operational amplifier configured to amplify the high impedance sensor response signal at a gain to produce the positive sensor signal; and
   the negative response signal circuit comprises a second inverted operational amplifier having a second negative input terminal coupled to the negative pickup terminal, and a second positive input terminal connected to a reference voltage, the second inverted operational amplifier configured to amplify the high impedance sensor response signal at the gain to produce the negative sensor signal.
14. The magnetostrictive displacement sensor according to any of the previous aspects, in particular aspect 13, wherein the gain is set to about 3 to 10.
15. The magnetostrictive displacement sensor according to any of the previous aspects, in particular aspect 12, wherein:
   the positive response signal circuit comprises a first non-inverted operational amplifier having a first positive input terminal coupled to the positive pickup terminal and a first negative input terminal, the first non-inverted operational amplifier configured to amplify the high impedance sensor response signal at a gain to produce the positive sensor signal, which is fed back to the first negative input terminal; and
   the negative response signal circuit comprises a second non-inverted operational amplifier having a second positive input terminal coupled to the negative pickup terminal and a second negative input terminal, the second non-inverted operational amplifier configured to amplify the high impedance sensor response signal at the gain to produce the negative sensor signal, which is fed back to the second negative input terminal.
16. The magnetostrictive displacement sensor according to any of the previous aspects, in particular aspect 15, wherein the gain is set to about 3 to 10.
17. The magnetostrictive displacement sensor according to any of the previous aspects, in particular aspect 12, wherein the signal conditioner includes a bandpass filter configured to pass frequencies of the sensor response signal within a range of about 100 kHz to 650 kHz to the balanced line driver circuit.
18. The magnetostrictive displacement sensor according to any of the previous aspects, in particular aspect 11, wherein the receiver circuit comprises a transformer.
19. The magnetostrictive displacement sensor according to any of the previous aspects, in particular aspect 18, wherein a length of the cable is greater than about 3 meters.
20. A method of operating magnetostrictive displacement sensor, the magnetostrictive displacement sensor comprising:
   a target magnet;
   a sensor assembly comprising
      a waveguide;
      a pickup sensing element; a signal conditioner comprising a balanced line driver circuit including:
         a positive response signal circuit; and
         a negative response signal circuit; and
      a cable connector including a positive sensor terminal, a negative sensor terminal and a waveguide terminal;
   sensor electronics comprising:
      an excitation generator;
      a receiver circuit; and
      a controller,
   the method comprising:
      connecting a positive response wire of a cable to the positive sensor terminal, a negative response wire of the cable to the negative sensor terminal, and a waveguide wire of the cable to the waveguide terminal;
      delivering a current pulse generated using the excitation generator to the waveguide through the waveguide wire and the waveguide terminal;
      generating a magnetostrictive response in the waveguide at a location of a target magnet in response to the current pulse in the waveguide;
      generating a high impedance sensor response signal to the magnetostrictive response through a positive pickup terminal and a negative pickup terminal of the pickup sensing element;
      converting the high impedance sensor response signal at the positive pickup terminal to a low impedance positive sensor signal using the positive response signal circuit;
      converting the high impedance negative sensor signal to low impedance negative sensor signal using the negative response signal circuit;
      delivering the low impedance positive sensor signal to the receiver circuit through the positive response wire and the low impedance negative sensor signal to the receiver circuit through the negative response wire;
      generating a received sensor signal based on the low impedance positive sensor signal and the low impedance negative sensor signal using the receiver circuit; and
   determining a position estimate of the location of the target magnet relative to the waveguide based on the received sensor signal using the controller.

## Claims

1. A magnetostrictive displacement sensor including a sensor assembly comprising:
a waveguide;
a pickup sensing element configured to generate a high impedance sensor response signal through a positive pickup terminal and a negative pickup terminal in response to a magnetostrictive response in the waveguide corresponding to a target magnet;
a signal conditioner comprising a balanced line driver circuit including:
a positive response signal circuit configured to produce a positive sensor signal at a low impedance based on the high impedance sensor response signal at the positive pickup terminal; and
a negative response signal circuit configured to produce a negative sensor signal at a low impedance based on the high impedance sensor response signal at the negative pickup terminal; and
a cable connector including a positive sensor terminal coupled to the positive sensor signal and a negative sensor terminal coupled to the negative sensor signal,
wherein, when a cable is connected to the cable connector, the balanced line driver circuit decouples the positive and negative pickup terminals from a capacitance of the cable.

2. The magnetostrictive displacement sensor according to claim 1, wherein the positive and negative response signal circuits form a differential buffer, and preferably, wherein the signal conditioner includes a bandpass filter configured to pass frequencies of the sensor response signal within a range of about 100 kHz to 650 kHz to the balanced line driver circuit.

3. The magnetostrictive displacement sensor according to any of the preceding claims, wherein:
the positive response signal circuit comprises a first inverted operational amplifier having a first negative input terminal coupled to the positive pickup terminal, and a first positive input terminal connected to a reference voltage, the first inverted operational amplifier configured to amplify the high impedance sensor response signal at a first gain to produce the positive sensor signal; and
the negative response signal circuit comprises a second inverted operational amplifier having a second negative input terminal coupled to the negative pickup terminal, and a second positive input terminal connected to a reference voltage, the second inverted operational amplifier configured to amplify the high impedance sensor response signal at a first gain to produce the negative sensor signal.

4. The magnetostrictive displacement sensor according to any of claims 1 or 2 wherein:
the positive response signal circuit comprises a first non-inverted operational amplifier having a first positive input terminal coupled to the positive pickup terminal and a first negative input terminal, the first non-inverted operational amplifier configured to amplify the high impedance sensor response signal at a first gain to produce the positive sensor signal, which is fed back to the first negative input terminal; and
the negative response signal circuit comprises a second non-inverted operational amplifier having a second positive input terminal coupled to the negative pickup terminal and a second negative input terminal, the second non-inverted operational amplifier configured to amplify the high impedance sensor response signal at a first gain to produce the negative sensor signal, which is fed back to the second negative input terminal.

5. The magnetostrictive displacement sensor according to claim 3 or 4, wherein the first gain is set to about 3 to 10.

6. The magnetostrictive displacement sensor according to any one of the preceding claims, including:
a cable attached to the cable connector and including a positive response wire connected to the positive sensor terminal, a negative response wire connected to a negative sensor terminal, and a waveguide wire coupled to a waveguide terminal of the cable connector that is connected to the waveguide, and in one embodiment, wherein a length of the cable is greater than about 3 meters; and
sensor electronics comprising:
an excitation generator configured to generate a current pulse that is delivered to the waveguide through the waveguide wire of the cable;
a receiver circuit configured to receive the positive sensor signal from the positive response wire and the negative sensor signal from the negative sensor wire and output a received sensor signal, and in one embodiment, wherein the receiver circuit comprises a transformer; and
a controller configured to generate a position estimate of the target magnet relative to the waveguide based on the received sensor signal.

7. A magnetostrictive displacement sensor comprising:
a target magnet;
a sensor assembly comprising
a waveguide;
a pickup sensing element configured to generate a high impedance sensor response signal through a positive pickup terminal and a negative pickup terminal in response to a magnetostrictive response in the waveguide corresponding to the target magnet;
a signal conditioner comprising a balanced line driver circuit including:
a positive response signal circuit configured to produce a positive response signal at a low impedance based on the high impedance sensor response signal at the positive pickup terminal; and
a negative response signal circuit configured to produce a negative sensor signal at a low impedance based on the high impedance sensor response signal at the negative pickup terminal; and
a cable connector including a positive sensor terminal coupled to the positive sensor signal, a negative sensor terminal coupled to the negative sensor signal, and a waveguide terminal coupled to the waveguide;
a cable attached to the cable connector and including a positive response wire connected to the positive sensor terminal, a negative response wire connected to a negative sensor terminal, and a waveguide wire coupled to the waveguide terminal; and
sensor electronics comprising:
an excitation generator configured to generate a current pulse that is delivered to the waveguide through the waveguide wire of the cable;
a receiver circuit configured to receive the positive sensor signal from the positive response wire and the negative sensor signal from the negative sensor wire and output a received sensor signal; and
a controller configured to generate a position estimate of the target magnet relative to the waveguide based on the received sensor signal.

8. The magnetostrictive displacement sensor according to claim 7, wherein the positive and negative response signal circuits form a differential buffer.

9. The magnetostrictive displacement sensor according to any one of claims 7 or 8, wherein:
the positive response signal circuit comprises a first inverted operational amplifier having a first negative input terminal coupled to the positive pickup terminal, and a first positive input terminal connected to a reference voltage, the first inverted operational amplifier configured to amplify the high impedance sensor response signal at a gain to produce the positive sensor signal; and
the negative response signal circuit comprises a second inverted operational amplifier having a second negative input terminal coupled to the negative pickup terminal, and a second positive input terminal connected to a reference voltage, the second inverted operational amplifier configured to amplify the high impedance sensor response signal at the gain to produce the negative sensor signal.

10. The magnetostrictive displacement sensor according to any one of claims 7 or 8, wherein:
the positive response signal circuit comprises a first non-inverted operational amplifier having a first positive input terminal coupled to the positive pickup terminal and a first negative input terminal, the first non-inverted operational amplifier configured to amplify the high impedance sensor response signal at a gain to produce the positive sensor signal, which is fed back to the first negative input terminal; and
the negative response signal circuit comprises a second non-inverted operational amplifier having a second positive input terminal coupled to the negative pickup terminal and a second negative input terminal, the second non-inverted operational amplifier configured to amplify the high impedance sensor response signal at the gain to produce the negative sensor signal, which is fed back to the second negative input terminal.

11. The magnetostrictive displacement sensor according to claims 9 or 10, wherein the gain is set to about 3 to 10.

12. The magnetostrictive displacement sensor according to claims 7 to 11, wherein the signal conditioner includes a bandpass filter configured to pass frequencies of the sensor response signal within a range of about 100 kHz to 650 kHz to the balanced line driver circuit.

13. The magnetostrictive displacement sensor according to any one of claims 7 to 12, wherein the receiver circuit comprises a transformer.

14. The magnetostrictive displacement sensor according to any one of claims 7 to 13, wherein a length of the cable is greater than about 3 meters.

15. A method of operating magnetostrictive displacement sensor, the magnetostrictive displacement sensor comprising:
a target magnet;
a sensor assembly comprising
a waveguide;
a pickup sensing element;
a signal conditioner comprising a balanced line driver circuit including:
a positive response signal circuit; and
a negative response signal circuit; and
a cable connector including a positive sensor terminal, a negative sensor terminal and a waveguide terminal;
sensor electronics comprising:
an excitation generator;
a receiver circuit; and
a controller,
the method comprising:
connecting a positive response wire of a cable to the positive sensor terminal, a negative response wire of the cable to the negative sensor terminal, and a waveguide wire of the cable to the waveguide terminal;
delivering a current pulse generated using the excitation generator to the waveguide through the waveguide wire and the waveguide terminal;
generating a magnetostrictive response in the waveguide at a location of a target magnet in response to the current pulse in the waveguide;
generating a high impedance sensor response signal to the magnetostrictive response through a positive pickup terminal and a negative pickup terminal of the pickup sensing element;
converting the high impedance sensor response signal at the positive pickup terminal to a low impedance positive sensor signal using the positive response signal circuit;
converting the high impedance negative sensor signal to low impedance negative sensor signal using the negative response signal circuit;
delivering the low impedance positive sensor signal to the receiver circuit through the positive response wire and the low impedance negative sensor signal to the receiver circuit through the negative response wire;
generating a received sensor signal based on the low impedance positive sensor signal and the low impedance negative sensor signal using the receiver circuit; and
determining a position estimate of the location of the target magnet relative to the waveguide based on the received sensor signal using the controller.
